# EUROPÄISCHE PATENTSCHRIFT

(11) **EP 0 575 727 B1**
(45) Veröffentlichungstag und Bekanntmachung des Hinweises auf die Patenterteilung: **09.07.1997**
(21) Anmeldenummer: 93106710.2
(22) Anmeldetag: 26.04.1993
(51) Int. Cl.: F16L 27/10, F01N 7/08

(54) **Verfahren zur Herstellung eines Rohrgelenks**
Method of manufacturing a pipe joint
Procédé de fabrication d'un joint de tuyau

(30) Priorität: 25.06.1992 DE 4220789
(43) Veröffentlichungstag der Anmeldung: 29.12.1993
(73) Patentinhaber: Witzenmann GmbH Metallschlauch-Fabrik Pforzheim, D-75175 Pforzheim (DE)
(72) Erfinder: Winzen, Wilfried, Dr., W-7530 Pforzheim (DE)
(74) Vertreter: Lemcke, Rupert, Dipl.-Ing.

(56) Entgegenhaltungen:
- EP-A- 0 250 901
- DE-U- 9 208 484
- GB-A- 2 125 502

## Beschreibung

Die Erfindung geht von einem Verfahren zur Herstellung eines Rohrgelenkes gemäß dem Oberbegriff des Anspruches 1 aus.

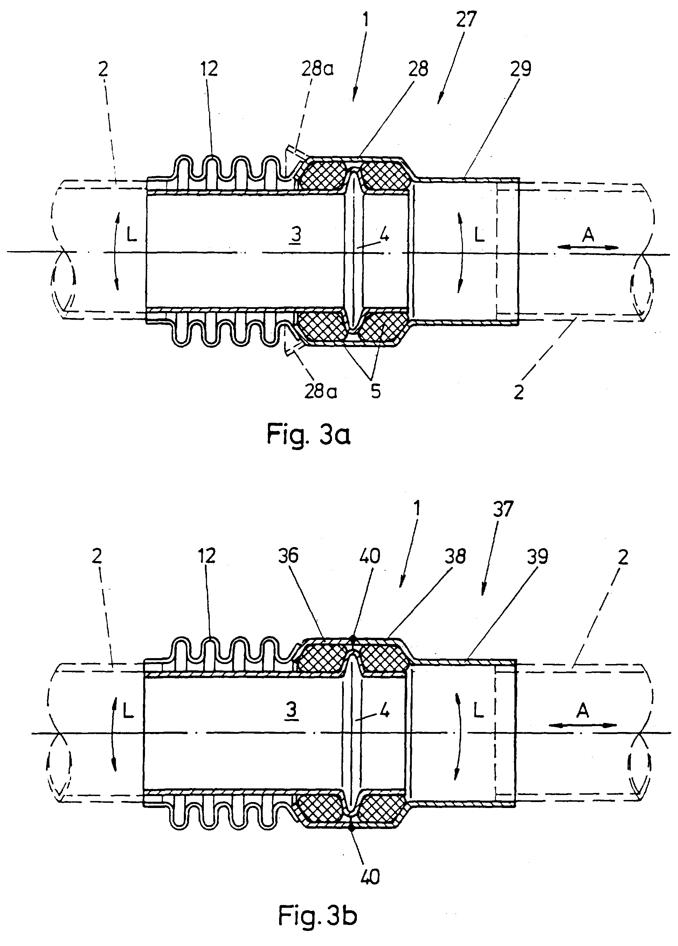

Durch die EP 0 208 128 B1 ist ein Rohrgelenk bekannt, bei dem die Manschette mit einem Rohransatz ein Teil bildet. Die zunächst am freien Ende offene Manschette wird über die an der Auffaltung des Gelenkrohres beiderseits anliegenden Drahtpreßringe geschoben und durch Umbördeln geschlossen (Fig. 3a).

Eine weitere Ausführung eines Rohrgelenkes nach der EP 0 250 901 A3 sieht eine quer zur Längsachse in der Mitte geteilte Manschette vor. Nach dem Aufziehen der Drahtpreßringe auf das Gelenkrohr wird auf dieses von der einen Seite die eine Halbmanschette und von der anderen Seite die andere Halbmanschette mit Rohransatz aufgeschoben und es werden die beiden Halbmanschetten entlang ihrer Stoßstelle unter gleichzeitiger Vorspannung der Drahtpreßringe miteinander verschweißt (Fig. 3b).

Die letztgenannte Druckschrift enthält auch eine Bauform (dort Figur 2) nach dem Oberbegriff des Anspruches 1, bei der jedoch die die Kissenkammer bildenden Teile so vorgefertigt sind, daß die Kante der äußeren Abbiegung des einen Teiles fluchtend mit der Kante des anderen Teiles verschweißt wird.

Allen genannten Ausführungsformen ist gemeinsam, daß der durch die jeweilige Manschette vorgegebene Querschnitt der die Drahtpreßringe aufnehmenden Kammer toleranzbedingte Maßabweichungen, zum Beispiel der Auffaltung des Gelenkrohres, der Drahtpreßringe und der Manschette selber außer acht läßt auch dann, wenn durch die Dimensionierung der die Manschette bildenden Bauteile eine Vorspannung der Drahtpreßringe an sich vorgegeben ist.

Der gewünschte Dämpfungsgrad wird jedoch nur erreicht, wenn die Drahtpreßringe unter einer bestimmten Vorspannung stehen. Diese ist mit den vorbeschriebenen Ausführungen nicht gewährleistet.

Die Aufgabe der Erfindung besteht daher darin, ein Rohrgelenk zu schaffen, bei dem Toleranzen der vorstehend genannten Art keinen Einfluß auf die Größe der Vorspannung der Drahtpreßringe mehr haben.

Diese Aufgabe wird durch die im Anspruch 1 angegebenen Merkmale gelöst. Die Unteransprüche zeigen vorteilhafte Ausgestaltungen des Erfindungsgegenstandes auf.

Die durch die Erfindung erzielten Vorteile bestehen insbesondere darin, daß durch die in axialer Richtung übereinanderschiebbaren Teile des Manschettenrohres Toleranzen ausgeglichen werden und eine definierte Vorspannung der Drahtpreßringe eingestellt werden kann, bevor die beiden Teile formschlüssig verbunden werden.

Anhand von zwei Ausführungsbeispielen wird die Erfindung in Verbindung mit den Zeichnungen nachfolgend näher erläutert. Es zeigt:
- Fig.1: in vereinfachter Darstellung ein erstes Ausführungsbeispiel eines mit dem erfindungsgemäßen Verfahren hergestellten Rohrgelenks im Längsschnitt.
- Fig.2: in vereinfachter Darstellung ein zweites Ausführungsbeispiel eines mit dem erfindungsgemäßen Verfahren hergestellten Rohrgelenks im Längsschnitt.
- Fig.3a und 3b: in vereinfachter Darstellung zwei bekannte Ausführungen eines Rohrgelenks im Längsschnitt.

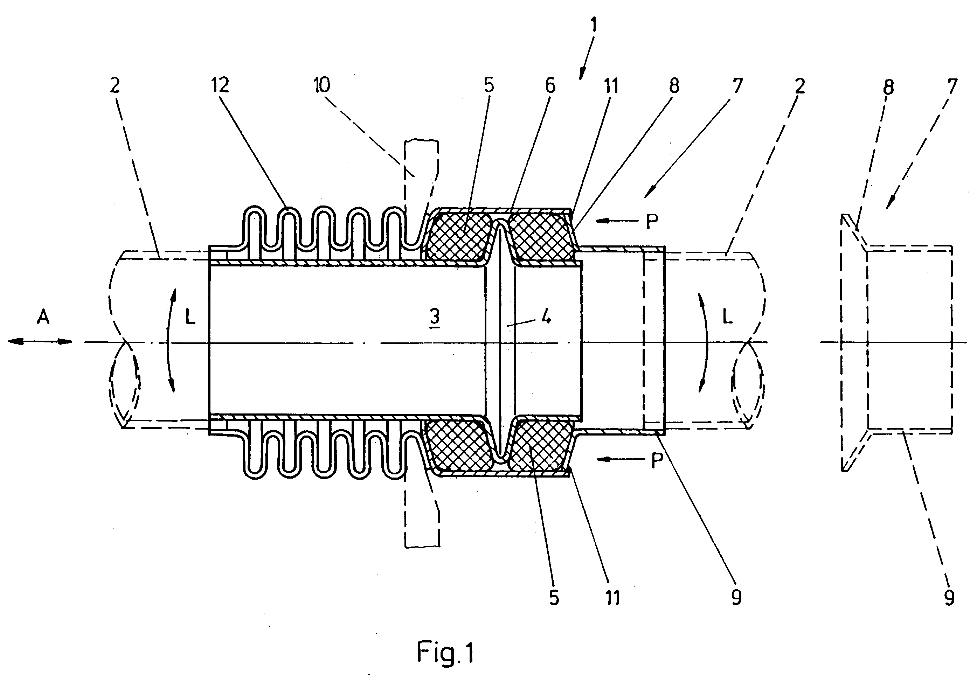

Die in den Figuren 1, 2, 3a und 3b gezeigten Ausführungen dienen in bekannter Weise zur Dämpfung von axialen und/oder lateralen Schwingungen A bzw. L, so daß auf ihre Aufgabe und Funktion nicht näher eingegangen wird. Jede Zeichnung zeigt Rohrleitungsteile 2, z.B. einer Kraftfahrzeug-Abgasanlage, in die ein Rohrgelenk 1 eingefügt ist. Alle Darstellungen basieren auf einem in Fig.3a dargestellten Rohrgelenk, wie es durch die Europäische Patentschrift 0 208 123 B1 bekannt ist. Die in Funktion und Ausbildung gleichen Teile sind in den Zeichnungen durch gleiche Positionszahlen gekennzeichnet.

Die Fig. 3a und die Fig.3b zeigen die eingangs bereits erwähnten bekannten Ausführungen in vereinfachter Darstellung im Längsschnitt.
Das Rohrgelenk gemäß Fig.3a hat ein Gelenkrohr 3, das mit seinem einen Ende in einem Rohrleitungsteil 2 gasdicht befestigt ist. Zum andere Ende hin hat das Gelenkrohr 3 eine ringförmige Auffaltung 4. Diese dient in axialer Richtung als Widerlager für zwei Drahtpreßringe 5. Ein aus einer ringförmigen Manschette 28 und Rohransatz 29 bestehendes Manschettenrohr 27 hat am freien Ende einen Bördelrand 28a. Nachdem die Manschette 28 über die Drahtpreßringe 5 geschoben ist, wird der Bördelrand 28a zur Mitte hin umgebogen, so daß sich die Preßringe 5 in einer beidseitig geschlossenen ringförmigen Kammer befinden. Zwischen dem Gelenkrohr 3 und der Manschette 28 besteht ein radialer Zwischenraum, um den notwendigen gegenseitigen Bewegungsspielraum zu gewährleisten. Die Drahtpreßringe 5 sind nicht gasdicht. Es besteht daher die Gefahr, daß Teile der durch das Rohrgelenk 1 geleiteten Abgase oder dergleichen nach außen dringen. Um dieses zu verhindern, ist zwischen dem Bördelrand 28a der Manschette 28 und dem einen Rohrleitungsteil 2 ein Dichtungsbalg 12 gasdicht befestigt, z.B. angeschweißt.

Die Fig.3b unterscheidet sich gegenüber der Fig.3a in der Ausbildung der Manschette. Die beidseits beschlossene Manschette ist quer zur Längsachse des Rohrgelenkes 1 in der Mitte geteilt. Die eine Halbmanschette 36 ist am Dichtungsbalg 12 befestigt, während die andere Halbmanschette 38 mit einem Rohransatz 39 ein Manschettenrohr 37 bildet. Nachdem das Gelenkrohr 3 mit den aufgezogenen Drahtpreßringen 5 in die Rohrhälfte 12/36 eingesetzt ist, wird das Manschettenrohr 37 auf Anschlag aufgeschoben und die beiden Halbmanschetten 36 und 38 miteinander verschweißt (Pos.40).

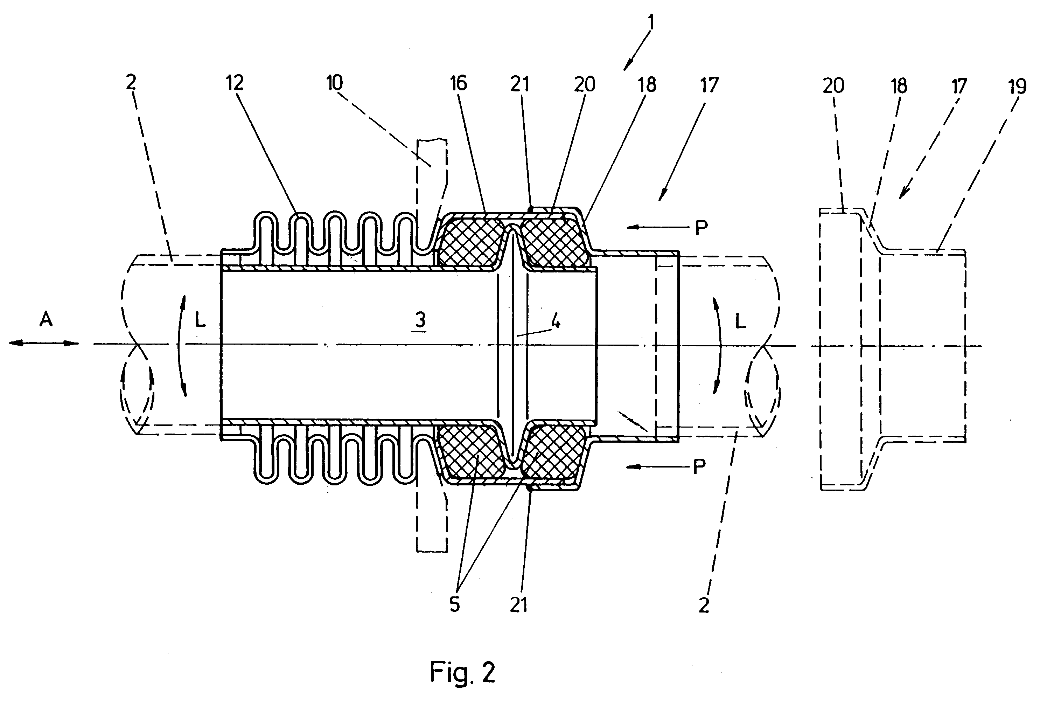

Bei diesen beiden Ausführungen bestimmt die Summe der einflußnehmenden Toleranzen in unzulässigem Umfang die Vorspannung der Drahtpreßringe 5. Mit den Ausführungen gemäß Fig.1 und Fig.2 ist eine genaue Bemessung der Vorspannung möglich.

Fig.1 zeigt in vereinfachter Darstellung ein erstes Ausführungsbeispiel eines mit dem erfindungsgemäßen Verfahren hergestellten Rohrgelenkes 1 im Längsschnitt. Diese Ausführung unterscheidet sich von den vorbeschriebenen Rohrgelenken durch die Ausbildung der Manschette und des Manschettenrohres. Es ist eine ringförmige Manschette 6 vorgesehen, die auf der Anschlußseite des Dichtungsbalges 12 geschlossen ist. Die Manschette 6 steht auf der anderen Seite in axialer Richtung etwas über den Drahtpreßring 5 vor. Die Manschette 6 wird durch ein Flanschrohr 7 geschlossen, das aus einem Rohransatz 9 mit einem Ringflansch 8 besteht. Der Außendurchmesser des Ringflansches 8 ist im Paßmaß gleich dem Innendurchmesser der Manschette 6, wie die abgesetzte strichlinierte Darstellung des Flanschrohres 7 gut erkennen läßt.

Zum Einstellen einer definierten Vorspannung der Drahtpreßringe 5 wird in das an die Manschette 6 anschließende Wellental des Balges 12 ein ringförmiges Widerlager 10 eingesetzt, das andeutungsweise strichliniert dargestellt ist. Mit einer, der erforderlichen Vorspannung entsprechenden Kraft P wird das Flanschrohr 7 in Pfeilrichtung in die Manschette 6 gedrückt. Unter Beibehalten des Andrucks wird sodann die Manschette 6 mit dem Ringflansch 8 des Flanschrohres 7 formschlüssig und gasdicht verbunden, z.B. durch eine Schweißnaht 11.

Fig.2 zeigt in vereinfachter Darstellung ein zweites Ausführungsbeispiel eines mit dem erfindungsgemäßen Verfahren hergestellten Rohrgelenkes 1 im Längsschnitt. Diese Ausführung stimmt mit der Fig.1 darin überein, daß eine Manschette 16 vorgesehen ist, die auf der Anschlußseite des Dichtungsbalges 12 geschlossen ist. Die andere offene Seite der Manschette steht jedoch in axialer Richtung gegenüber dem außen außenliegenden Drahtpreßring 5 etwas zurücksteht. Die Manschette 16 wird durch ein Stufenrohr 17 geschlossen, das aus einem Rohransatz 19 mit Ringflansch 18 und Übertritt 20 besteht. Der Innendurchmesser des Übertritts 20 ist im Paßmaß gleich dem Außendurchmesser der Manschette 6, wie die abgesetzte strichlinierte Darstellung des Stufenrohres 17 gut erkennen läßt. Die Manschette 16 steht gegenüber dem außenliegenden Drahtpreßring 5 soweit zurück, daß das in diesem Fall über die Manschette 16 greifende Stufenrohr 17 mit seinem Ringflansch 18 nicht in Anlage an die Stirnseite der Manschette gelangt.

Zur Einstellung einer definierten Vorspannung der Drahtpreßringe 5 wird, wie zu Fig.1 beschrieben, das ringförmige Widerlager 10 eingesetzt und das Stufenrohr 17 mit einer der erforderlichen Vorspannung entsprechenden Kraft P in Pfeilrichtung gegen den außenliegenden Drahtpreßring 5 gedrückt. Unter Beibehaltung des Andrucks wird sodann die Manschette 16 mit dem Übertritt 20 des Stufenrohres 17 formschlüssig und gasdicht verbunden, z.B. durch eine Schweißnaht 21.

## Patentansprüche

1. Verfahren zur Herstellung eines Rohrgelenkes zur axialen und lateralen Schwingungsentkopplung von Rohrleitungen (2), das ein Gelenkrohr (3) mit ringförmiger Auffaltung (4), zwei an der Auffaltung (4) unter axialer Vorspannung anliegende Drahpreßringe (5) und eine die Drahtpreßringe (5) von außen formschlüssig umfassendes Manschettenrohr (6, 7; 16, 17) hat, welches aus zwei im Manschettenbereich in axialer Richtung übereinandergreifenden und formschlüssig miteinander verbundenen Teilen (6, 7; 16, 17) besteht,
dadurch gekennzeichnet,
daß die Teile (6, 7; 16, 17) vor ihrer formschlüssigen Verbindung (11, 21) bis zum Ausgleich unterschiedlicher Toleranzen zwischen ihnen, der Auffaltung (4) des Gelenkrohres (3) und den Drahtpreßringen (5) sowie bis zur Herstellung einer vorherbestimmbaren Vorspannung der Drahtpreßringe (5) axial zusammengeschoben und in dieser Stellung miteinander verbunden werden.

2. Verfahren nach Anspruch 1,
dadurch gekennzeichnet,
daß als Manschettenrohr eine einseitig geschlossene Manschette (6), die auf der anderen Seite in axialer Richtung über den dortigen Drahtpreßring (5) übersteht, und ein in den Überstand paßgenau eingreifender Ringflansch (8) mit Rohransatz (9) verwendet wird.

3. Verfahren nach Anspruch 1,
dadurch gekennzeichnet,
daß als Manschettenrohr eine einseitig geschossene Manschette (16), die auf der anderen Seite in axialer Richtung gegenüber dem dortigen Drahtpreßring (5) zurücksteht, und ein die Manschette (16) übergreifendes Stufenrohr (17) verwendet wird.

## Claims

1. Method for producing a pipe articulation for the axial and lateral decoupling of vibrations of pipe ducts (2), which articulation has a link pipe (3) with an annular seamed-on part (4), two wire pressure rings (5), which bear against the seamed-on part (4) while being axially preloaded, and a collar pipe (6, 7; 16, 17), which externally surrounds the wire pressure rings (5) with a form-fit and consists of two parts (6, 7; 16, 17) engaging over one another in the collar region in the axial direction and positively connected to one another,
characterised in that, before being positively connected (11, 21), the parts (6, 7; 16, 17) are axially pushed together until different tolerances between them, the seamed-on part (4) of the link pipe (3) and the wire pressure rings (5) are compensated and until the wire pressure rings (5) are preloaded to a predeterminable degree, and are connected together in this position.

2. Method according to claim 1,
characterised in that a collar (6) which is closed on one side and projects in the axial direction on the other side beyond the wire pressure ring (5) provided there, and an annular flange (8), which engages in the projecting part with a precise fit, with a pipe extension (9) are used as the collar pipe.

3. Method according to claim 1,
characterised in that a collar (16) which is closed on one side and set back slightly on the other side in the axial direction with respect to the wire pressure ring (5) provided there, and a stepped pipe (17) engaging over the collar (16) are used as the collar pipe.

## Revendications

1. Procédé de fabrication d'une articulation ou joint de tuyau pour le découplage vibrationnel (pour empêcher la transmission de vibrations) axial et latéral de tuyaux (2), qui comprend un tube articulé (3) présentant un pli annulaire saillant (4), deux bagues de pressage en fil (5) appliquées sous précontrainte axiale contre le pli (4) et un tube/manchon (6, 7; 16, 17) qui entoure les bagues de pressage (5) extérieurement à complémentarité de formes et est composé de deux parties (6, 7; 16, 17) qui sont enfilées l'une par-dessus l'autre en direction axiale dans la zone du manchon et reliées mécaniquement ou rigidement entre elles,
caractérisé en ce que les parties (6, 7; 16, 17), avant leur assemblage mécanique ou rigide (11, 21), sont axialement emboîtées l'une dans l'autre jusqu'à la compensation de tolérances variables entre elles, du pli (4) du tube articulé (3) et des bagues de pressage en fil (5), ainsi que jusqu'à l'établissement d'une précontrainte des bagues de pressage (5) pouvant être préfixée, et sont reliées entre elles dans cette position.

2. Procédé selon la revendication 1, caractérisé en ce que, comme tube/manchon, on utilise un manchon (6) fermé d'un côté et faisant saillie axialement, sur l'autre côté, de la bague de pressage en fil (5) se trouvant à cet endroit, ainsi qu'une collerette annulaire (8) s'ajustant dans la saillie du manchon et qui est solidaire d'une tubulure (9).

3. Procédé selon la revendication 1, caractérisé en ce que, comme tube/manchon, on utilise un manchon (16) fermé d'un côté et disposé axialement en retrait, sur l'autre côté, par rapport à la bague de pressage en fil (5) se trouvant à cet endroit, ainsi qu'un tube étagé (17) coiffant le manchon (16).
